(19) Europäisches Patentamt
European Patent Office
Office européen des brevets

(11) **EP 4 538 035 A1**

(12) **EUROPEAN PATENT APPLICATION**

(43) Date of publication:
**16.04.2025 Bulletin 2025/16**

(21) Application number: **24205206.6**

(22) Date of filing: **08.10.2024**

(51) International Patent Classification (IPC):
**B32B 27/08** *(2006.01)* **B32B 27/30** *(2006.01)*
**B32B 27/36** *(2006.01)*

(52) Cooperative Patent Classification (CPC):
**B32B 27/08; B32B 27/306; B32B 27/36;**
B32B 2250/40; B32B 2250/42; B32B 2307/30;
B32B 2307/412; B32B 2307/7244; B32B 2307/7246;
B32B 2307/7265; B32B 2307/732; B32B 2439/70

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.10.2023 KR 20230134401**

(71) Applicant: **SK microworks solutions Co., Ltd.
Pyeongtaek-si Gyeonggi-do 17784 (KR)**

(72) Inventors:
• **JEONG, Bich Nam
16336 Suwon-si, Gyeonggi-do (KR)**
• **HAN, Kweon Hyung
16336 Suwon-si, Gyeonggi-do (KR)**
• **LEE, Seokin
16336 Suwon-si, Gyeonggi-do (KR)**

(74) Representative: **BCKIP Part mbB
MK1
Landsbergerstraße 98, 3.Stock
80339 München (DE)**

(54) **PACKAGE FILM AND PACKAGE MATERIAL**

(57) Disclosed are a package film and a package material for packaging a food product or the like. A package film according to an embodiment includes a laminate including a first layer and a second layer disposed on the first layer, wherein the first layer includes a polyester resin including a diol residue and a dicarboxylic acid residue, and the second layer includes a vinyl alcohol-based copolymerization resin and the package film has an oxygen permeability of 10 cc/(m$^2$-day-atm) or less at 23°C. The embodiments can provide package films and package materials having excellent properties such as oxygen barrier and moisture barrier, and also having excellent optical properties and improved printability.

EP 4 538 035 A1

**Description**

**CROSS-REFERENCE TO RELATED APPLICATIONS**

This application claims the priority of Patent Application No. 10-2023-0134401, filed October 10, 2023 at Republic of Korea.

**BACKGROUND**

1. Field

The following description relate to package films and package materials that have excellent oxygen barrier permeability characteristics and are useful for packaging food products and the like.

2. Description of Related Art

Films that can seal out oxygen and moisture are required for products in a variety of industries. For example, package materials for food products where freshness is important, and sealing materials for oxygen-sensitive electronic components. There is a growing need for films with adequate heat resistance, mechanical strength, transparency, and low oxygen permeability.

Polyester has stable properties such as heat resistance, mechanical strength, and transparency. As a result, polyester is widely used in a variety of applications, including containers, packaging, films, cables, and more.

However, polyester is highly permeable to oxygen, making it difficult to use in applications that require oxygen barriers.

The foregoing background technology is technical information that the inventor had in the inventor's possession to derive the disclosure or acquired in the process of deriving the disclosure and does not necessarily constitute prior art available to the general public prior to the filing of the present application.

Related art includes Republic of Korea Registered Patent No. 10-0516550.

**SUMMARY**

An objective of an embodiment is to provide a package film or the like having excellent oxygen barrier permeability characteristics, etc.

To achieve the above objectives, a package film according to one embodiment includes a laminate including a first layer and a second layer disposed on the first layer, wherein the first layer includes a polyester resin including diol residues and dicarboxylic acid residues, and the second layer including a vinyl alcohol-based copolymerized resin.

The package film may have an oxygen permeability of 10 cc/(m$^2$-day-atm) or less at 23°C.

The package film may have a moisture permeability of 50 g/(m$^2$-day) or less.

The vinyl alcohol-based copolymer resin may be a butenediol vinyl alcohol copolymer resin or an ethylene vinyl alcohol copolymer resin.

The pyrolysis temperature of the vinyl alcohol-based copolymerized resin may be from 210°C to 230°C.

The first layer may be located in at least one of the two outermost layers of the laminate.

The laminate may have a light transmittance of at least 80% for the visible light of wavelengths 380 nm to 780 nm.

The laminate may have a haze of 30% or less.

The laminate may have from 3 to 225 alternating layers of the first layer and the second layer.

The maximum thickness deviation (MTD$_{200}$), represented by Equation 2 below, may be 10 $\mu$m or less.

[Equation 2]

$$MTD_{200} = THK_{max} - THK_{min}$$

In Equation 2, THK$_{max}$ is a maximum thickness of a package film specimen having a width of at least 200 cm when measured at 2 cm intervals, and THK$_{min}$ is a minimum thickness of a package film specimen having a width of 200 cm when measured at 2 cm intervals.

To accomplish the above objectives, the package material according to one embodiment includes a package film as described above.

EP 4 538 035 A1

**BRIEF DESCRIPTION OF THE DRAWINGS**

FIG. 1 is a conceptual diagram illustrating a laminate included in a package film, according to an embodiment.
FIG. 2 is a conceptual diagram illustrating a laminate included in a package film, according to another embodiment.
FIG. 3 is a conceptual diagram illustrating a laminate included in a package film, according to another embodiment.

**DETAILED DESCRIPTION**

Hereinafter, embodiments of the present disclosure will be described in detail with reference to the accompanying drawings to facilitate practice by those having ordinary skill in the technical field to which the disclosure belongs. However, the disclosure may be implemented in many different forms and is not limited to the embodiments described herein. Throughout the specification, like parts are designated by the same drawing designations.
Throughout this specification, the term "combination thereof' as used in a Markush-style representation means one or more mixtures or combinations selected from the group of components described in the Markush-style representation, including one or more selected from the group of components.
Throughout this Statement, references to "A and/or B" shall mean "A, B, or A and B".
Throughout this specification, terms such as "first," "second," and "second" are used to distinguish like terms from each other. In addition, expressions in the singular include the plural unless the context clearly indicates otherwise.
Throughout this specification, whenever any part is the to "include" any component, it is meant to be in addition to and not to the exclusion of any other component, unless specifically stated to the contrary.
Throughout this specification, the term disposing B on A means disposing B on A with B directly abutting A or with another layer between them, and is not to be construed as limited to disposing B abutting the surface of A.
In this specification, the drawings may be shown with exaggerated or omitted configurations for purposes of illustration and shall not be construed to limit the scope of the embodiments.
A multilayer film is presented as a package film in which a layer comprising a polyester resin is inserted with a layer performing an oxygen barrier function. The inventors present a package film by laminating a first layer comprising a polyester-based resin and a second layer performing an oxygen barrier function. The film has excellent mechanical and optical properties, excellent oxygen and moisture barrier properties, improved processability, and recyclability of polyester resin, making it an excellent package film.

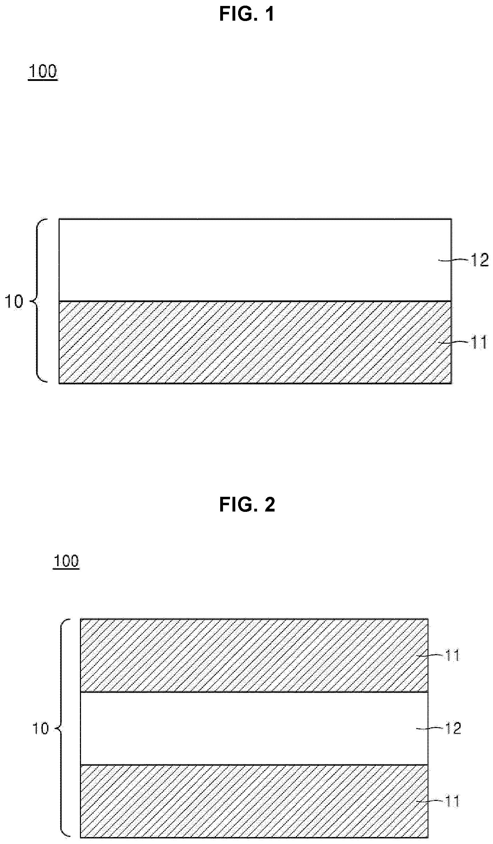

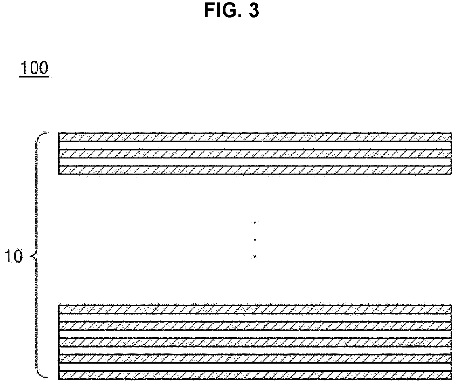

FIG.1 is a conceptual diagram illustrating a laminate included in a package film according to an embodiment, FIG.2 is a conceptual diagram illustrating a laminate included in a package film according to another embodiment, and FIG.3 is a conceptual diagram illustrating a laminate included in a package film according to yet another embodiment.
Embodiments will now be described in more detail with reference to the above figures.

Laminate

In one or more implementations, a laminate 10 is a laminate 10 with a first layer 11 and a second layer 12 comprising polymeric resins that are distinct from each other.
The first layer 11 and the second layer 12 may be stacked vertically. The first layer 11 and the second layer 12 may be alternately and repeatedly stacked in three or four or more layers.
In one or more embodiments, a first layer 11 comprises a copolymerized polyester resin.
The copolymerized polyester resin may be a polymerization of a diol and a dicarboxylic acid comprising two or more diol residues and one or more dicarboxylic acid residues.
The copolymerized polyester resin may be a polymerization of a diol and a dicarboxylic acid comprising three or more diol residues and one or more dicarboxylic acid residues.
The diol residue may comprise an aliphatic diol residue, an alicyclic diol residue, an aromatic diol residue, or a derivative thereof. The aliphatic diol residue may be, for example, an aliphatic diol residue of carbon number 2 to 10, and may have a linear or branched structure.
Specific examples of aliphatic diols comprising the aliphatic diol residues comprise ethylene glycol, diethylene glycol, neopentyl glycol, 1,3-propanediol, 1,2-octanediol, 1,3-octanediol, 2,3-butanediol, 1,3-butanediol, 1,4-butanediol, 1,5-pentanediol, 2-butyl-2-ethyl-1,3-propanediol, 2,2-diethyl-1,5-pentanediol, 2,4-diethyl-1,5-pentanediol, 3-methyl-1,5-pentanediol, 1,1-dimethyl-1,5-pentanediol, 1,6-hexanediol, 2-ethyl-3-methyl-1,5-hexanediol, 2-ethyl-3-ethyl-1,5-hexanediol, 1,7-heptanediol, 2-ethyl-3-methyl-1,5-heptanediol, 2-ethyl-3-ethyl-1,6-heptanediol, 1,8-octanediol, 1,9-nonanediol, 1,10-decanediol, derivatives thereof, or any combination thereof.
The dicarboxylic acid residue may comprise an aromatic dicarboxylic acid residue, an aliphatic dicarboxylic acid residue, an alicyclic dicarboxylic acid residue, or an esterified residue thereof.

Specific examples of dicarboxylic acids comprising the dicarboxylic acid residues may be terephthalic acid, dimethylterephthalic acid, isophthalic acid, naphthalenedicarboxylic acid, orthophthalic acid, adipic acid, azelaic acid, sebacic acid, decanedicarboxylic acid, and esters thereof; or combinations thereof. In particular, the dicarboxylic acid may comprise one or more species selected from the group consisting of terephthalic acid, dimethyl terephthalate, naphthalenedicarboxylic acid, and orthophthalic acid.

In one or more embodiments, the copolymerized polyester resin may be a polymerization of a diol and an aromatic dicarboxylic acid comprising two or more diol residues; and one or more aromatic dicarboxylic acid residues.

In one or more embodiments, the copolymerized polyester resin may be a polymerization of ethylene glycol; a diol comprising one or more comonomers; and one or more aromatic dicarboxylic acids. According to another embodiment, the copolymerized polyester resin may be a polymerization of ethylene glycol; a diol comprising two or more comonomers; and an aromatic dicarboxylic acid.

The diol residues may comprise ethylene glycol residues. The diol may comprise from 50 mol% to 90 mol% ethylene glycol based on the total of the diol. For example, the diol may comprise from 60 mol% to 90 mol%, from 63 mol% to 85 mol%, or from 65 mol% to 83 mol% ethylene glycol based on the diol as a whole. When the range is satisfied, the polyester resin may have an improved thermal shrinkage rate and a reduced clumping ratio.

The diol may comprise any of the aforementioned diols except ethylene glycol as the comonomer. For example, the diol may comprise as comonomers diethylene glycol, 1,4-cyclohexanedimethanol, 1,3-propanediol, 1,2-octanediol, 1,3-octanediol, 2,3-butanediol, 1,3-butanediol, 1,4-butanediol, 1,5-pentanediol, neopentyl glycol, 2-butyl-2-ethyl-1,3-propanediol, 2,2-diethyl-1,5-pentanediol, 2,4-diethyl-1,5-pentanediol, 3-methyl-1,5-pentanediol, 1,1-dimethyl-1,5-pentanediol, or combinations thereof. For example, the diol may comprise at least one selected from the group consisting of neopentylglycol, cyclohexanedimethanol, and diethylglycol as the comonomer.

In one or more embodiments, the diol may comprise diethylene glycol as a comonomer. The content of diethylene glycol in the diol may comprise from 1 mol% to 15 mol% based on the total of the diol. For example, the diol may comprise 1 mol% to 10 mol%, 1 mol% to 5 mol%, 5 mol% to 10 mol%, or 3 mol% to 7 mol% based on the total of the diol. When the range is satisfied, the polyester resin may have an improved heat shrinkage rate and a reduced clumping ratio.

In one or more embodiments, the diol may comprise at least one of neopentylglycol and cyclohexanedimethanol as the comonomer. The neopentylglycol and/or cyclohexanedimethanol of the diol may comprise in an amount of 1 mol% or more, 5 mol% or more, 10 mol% or more, 15 mol% or more, or 20 mol% or more based on the total of the diol. The neopentylglycol and/or cyclohexanedimethanol in the diol may comprise in an amount of 50 mol% or less, 45 mol% or less, 40 mol% or less, 35 mol% or less, 30 mol% or less, or 25 mol% or less based on the total of the diol.

If the range is satisfied, the copolymerized polyester resin can help to obtain a suitable thermal shrinkage rate in the main shrinkage direction and the transverse direction upon stretching. If the content of the neopentyl glycol and/or cyclohexanedimethanol exceeds the above range, the copolymerized polyester resin may wrinkle or deform upon stretching. Furthermore, if the content of the neopentyl glycol and/or cyclohexanedimethanol is less than the above range, the copolymerized polyester resin may have a larger amorphous region, which may improve the shrinkage properties in the principal axial direction but may decrease the shrinkage properties in the main shrinkage direction and the transverse direction, which may increase the coefficient of expansion.

In one or more embodiments, the diol may comprise at least one species selected from neopentylglycol and cyclohexanedimethanol as the comonomer; and diethylene glycol. For example, the diol may comprise 20 mol% to 30 mol% of at least one species selected from neopentyl glycol and cyclohexanedimethanol as the comonomer; and 1 mol% to 15 mol% of diethylene glycol.

In one or more embodiments, the dicarboxylic acid may comprise 80 mol% or more, 90 mol% or more, or 95 mol% or more of terephthalic acid or dimethylterephthalate, based on the total of the dicarboxylic acid. However, the dicarboxylic acid may comprise very little isophthalic acid. For example, the content of isophthalic acid in the dicarboxylic acid may be 5 mol% or less, 3 mol% or less, or 1 mol% or less.

In one or more embodiments, the diol may comprise 20 mol% to 40 mol% of at least one selected from the group consisting of neopentylglycol, cyclohexanedimethanol, diethylene glycol, and combinations thereof, as a comonomer, and the content of isophthalic acid in the aromatic dicarboxylic acid may be less than 1 mol%. As a specific embodiment, the copolymerized polyester resin may be a glycol-modified polyethylene terephthalate (PETG).

In one or more embodiments, the copolymerized polyester resin may further comprise an alcohol other than the diol, for example a monovalent alcohol. For example, the monohydric alcohol may be methanol, ethanol, isopropanol, allyl alcohol, or benzyl alcohol. Specifically, the copolymerized polyester resin may comprise from 10 to 40 parts by weight of the monohydric alcohol, or from 15 to 30 parts by weight, based on 100 parts by weight of the diol.

In one or more embodiments, the copolymerized polyester resin may have a melting point of 170°C to 230°C. Specifically, the melting point of the copolymerized polyester resin may be from 180°C to 220°C or may be from 190°C to 210°C. If the above range is satisfied, the coextrusion process can be further applied where the melting point of the first layer 11 resin is below the pyrolysis temperature of the second layer 12 resin.

In one or more implementations, a second layer 12 comprises a vinyl alcohol-based copolymerized resin. By applying a vinyl alcohol-based copolymerized resin to the second layer 12, the oxygen barrier permeability of the laminate 10 can be further improved.

The vinyl alcohol-based copolymer resin may comprise a butenediol vinyl alcohol copolymer resin (BVOH) or an ethylenediol vinyl alcohol copolymer resin (EVOH).

The above-mentioned ethylenediol vinyl alcohol copolymer resin (EVOH) is a copolymer of ethylene and vinyl alcohol, and commercially available products include Soarnol of Mitsubishi Chemical Corporation and EVAL of Kurarei Corporation and the like. The ethylenediol vinyl alcohol copolymer resin may have a content of ethylene groups of 20 mol% or more, 25 mol% or more, 30 mol% or more, 35 mol% or more, or 40 mol% or more. The content of the ethylene groups may be 48 mol% or less, or 45 mol% or less. With such a content of ethylene groups, the ratio of repeating units of vinyl alcohol groups and ethylene groups can be adjusted to an appropriate range, which can help to control the moisture permeability and oxygen permeability of the package film at the same time.

The butenediol vinyl alcohol copolymer (BVOH) may be produced by copolymerization of butenediol and vinyl acetate followed by hydrolysis of vinyl acetate. Alternatively, the butenediol vinyl alcohol copolymer (BVOH) may be a BVOH sold as NICHIGO G-POLYMER™ by Mistubishi Chemical. For example, the pelletized product of NICHIGO G-POLYMER™ may be any one selected from the group consisting of AVE8077P, BVE8049P, OKS-8074P, OKS-8211P, and combinations thereof.

In one or more embodiments, the butenediol vinyl alcohol copolymer (BVOH) is preferred for application as the second layer 12 resin over the ethylenediol vinyl alcohol copolymer resin (EVOH). This is because, compared to the ethylenediol vinyl alcohol copolymer resin (EVOH), the butenediol vinyl alcohol copolymer (BVOH) has very good interlayer adhesion and can be prepared to have excellent adhesion with the polyester-based resin, the first layer 11 resin, without forming a separate adhesive layer.

The second layer 12 may be applied as a water-soluble layer that is soluble in water. In particular, the second layer 12 resin can be dissolved in water at high temperatures as well as in water at relatively low temperatures. Specifically, the second layer 12 resin can be substantially completely dissolved in 90°C water within 1 hour, substantially completely dissolved in 70°C water within 1 hour, and substantially completely dissolved in 20°C water within 2 hours. The second layer 12 resin is highly soluble in water, which can increase the water solubility of the laminate 10 as described hereinafter. Furthermore, the second layer 12 resin may be highly soluble in water and may leave substantially no residual composition in the first layer 11 upon recycling of the laminate 10.

The second layer 12 resin may have a melt flow rate (MFR) of greater than or equal to 10 g/10min at 210°C. Specifically, the second layer 12 resin may have a melt flow rate (M FR) of 15 g/10min or more, 20 g/10min or more, 25 g/10min or more, or 30 g/10min or more. The second layer 12 resin may have a melt flow rate (MFR) of 100 g/10min or less. If the above range is met, the manufacturing processability of the second layer 12 may be improved. For example, the second layer 12 may have a better workability to form via a coextrusion process.

The second layer 12 resin may have a viscosity of 30,000 Poise or less at 230°C. For example, the viscosity of the second layer 12 resin may be 20,000 Poise or less, 10,000 Poise or less, or 9,000 Poise or less at 230°C. The viscosity of the second layer 12 resin may be greater than or equal to 100 Poise at 230°C. For example, the viscosity of the second layer 12 resin may be greater than or equal to 300 poises, greater than or equal to 500 poises, or greater than or equal to 1,000 poises at 230°C. If the above range is satisfied, the second layer 12 resin may have good fluidity during extrusion and may have a better workability to form through a coextrusion process.

The pyrolysis temperature of the second layer 12 resin may be from 210°C to 230°C. For example, the pyrolysis temperature of the second layer 12 resin may be 215°C to 225°C, or 217°C to 223°C, etc. As a general polyester, the melting point of polyethylene terephthalate (PET) is higher than the pyrolysis temperature of polyvinyl alcohol (PVOH) resin, making it difficult to apply the coextrusion process. In an embodiment, the melting point of the first layer 11 resin may be below the pyrolysis temperature of the second layer 12 resin. Therefore, the first layer 11 and the second layer 12 of the embodiment may be prepared through a coextrusion process more easily.

The glass transition temperature of the second layer 12 resin may be greater than or equal to 60°C. For example, the glass transition temperature of the second layer 12 resin may be 65°C or higher, 70°C or higher, or 75°C or higher. The glass transition temperature of the second layer 12 resin may be 200°C or less, 150°C or less, or 100°C or less. Since a typical display device may have a high temperature environment inside, a heat-resistant material may be required. If the above range is satisfied, the heat resistance of the second layer 12 may be enhanced.

In one or more implementations, the first layer 11 and the second layer 12 may comprise a separate adhesive layer between them. Alternatively, the first layer 11 and the second layer 12 may be in direct contact without a separate adhesive layer between them.

When a butenediol vinyl alcohol copolymer resin (BVOH) is applied as the second layer 12 resin, even when the first layer 11 and the second layer 12 are in direct contact, the first layer 11 and the second layer 12 have high adhesion that is substantially non-delaminating even in a high temperature and humidity environment. It was confirmed that the laminate 10 does not delaminate between the first layer 11 and the second layer 12 even when exposed to a constant temperature and humidity chamber (QM200M of QMESYS) at a temperature of 85°C and a relative humidity of 85% for more than 500 hours. As a result, the package film can omit the interlayer adhesive layer, simplifying the process and providing a film with superior physical properties at lower thicknesses.

The laminate 10 may comprise a first layer 11 and a second layer 12 in a constant weight ratio. Based on 100 parts by weight of the laminate, the second layer 12 may comprise from 1 to 50 parts by weight. The laminate 10 may comprise from 3 to 40 parts by weight of the second layer 12, or from 5 to 30 parts by weight, based on 100 parts by weight of the laminate.

The laminate 10 has excellent water dispersibility. This helps to facilitate recycling in products where dissimilar materials are applied together.

In one or more embodiments, the laminate 10 can be dissolved in water at 60°C±5°C (i.e., 55°C to 65°C) by placing 10 specimens, each of them is a laminate of transverse 1 cm and longitudinal 1 cm, in water and stirring at a rotational speed of 300 rpm for 120 minutes using a stirrer, thereby dissolving the second layer 12 in the water. In this case, the first layer 11 is not melted and can be easily separated and collected for recycling.

In one or more embodiments, the laminate 10 can be melted by placing ten 0.5 cm long and 0.25 cm wide laminate specimens in a 1 wt% aqueous solution of sodium hydroxide (NaOH) at 85°C±5°C (i.e., 80°C to 90°C) and stirring for 15 minutes at a rotational speed of 300 rpm using a stirrer to melt the second layer 12 in the 1 wt% aqueous solution of sodium hydroxide. In this case, the first layer 11 is not melted and can be easily separated and collected for recycling.

The laminate 10 may have an oxygen permeability of 10 cc/($m^2$-day-atm) or less.

The oxygen permeability of the laminate 10 may be 7.5 cc/($m^2$-day-atm) or less, 5.5 cc/($m^2$-day-atm) or less, 4 cc/($m^2$-day-atm) or less, 3 cc/($m^2$-day-atm) or less, 2 cc/($m^2$-day-atm) or less, 1 cc/($m^2$-day-atm) or less, or 0.1 cc/($m^2$-day-atm) or less. Alternatively, it may be 0.05 cc/($m^2$-day-atm) or less. The oxygen permeability of the laminate 10 may be greater than or equal to 0.0001 cc/($m^2$-day-atm). If the above range is satisfied, the laminate 10 can effectively block oxygen entering from the outside. The above oxygen permeability is based on a measurement at 23°C (±0.5°C).

Moisture permeability can be evaluated at a temperature of 37.8°C±0.5°C and a humidity of 100 RH%.

The moisture permeability of the laminate 10 may be 50 g/($m^2$-day) or less.

The laminate 10 may have a moisture permeability of 50 g/($m^2$-day) or less, 45 g/($m^2$-day) or less, 40 g/($m^2$-day) or less, 36 g/($m^2$-day) or less, 25 g/($m^2$-day) or less, 24 g/($m^2$-day) or less, or 23 g/($m^2$-day) or less. The moisture permeability of the laminate 10 may be greater than or equal to 0.0001 g/($m^2$-day), or greater than or equal to 0.001 g/($m^2$-day). In such a case, the laminate 10 can effectively block moisture from entering from the outside.

The moisture permeability of the embodiments described herein was measured at a temperature and humidity condition of 37.8°C±0.5°C and 100 RH% in accordance with ASTM F1249-20 using a PERMATRAN-W700 tester from MOCON, USA, at any thickness selected from 0.3 mm to 0.15 mm, but the method of measuring moisture permeability is not limited thereto.

The total number of layers of the laminate 10 may be 4 or more, 6 or more, 10 or more, 31 or more, 35 or more, or 37 or more. The laminate 10 may have 425 or fewer layers, 325 or fewer layers, or 225 or fewer layers.

The total number of layers of the laminate 10 is based on the number of layers determined by applying the same resin as the resin of the first layer 11 to the subsequent skin layer, assuming that the first layer 11 of the laminate 10 is present when it is difficult to distinguish between the first layer 11 of the laminate 10 and the layers of the neighboring skin layers.

By alternately laminating the first layer 11 and the second layer 12 in a multilayer structure, the laminate 10 can provide a package film having a mechanical strength above a suitable level compared to the polyester film.

The laminate 10 may be one in which the first layer 11 and the second layer 12 are alternately laminated in three or more layers, or in three to 255 alternately laminated layers. In this case, manufacturing processability can be further improved even if a relatively large amount of the second layer composition is applied.

The first layer 11 may prevent the second layer 12 from being directly exposed to the external environment, thereby preventing the properties of the laminate 10 or multilayer film from deteriorating.

Skin Layer

The package film of an embodiment may further comprise a skin layer.

The skin layer may be disposed on one side or the other of the laminate 10.

The skin layer may be disposed on one side or the other of the laminate 10, respectively. In this case, the laminate 10 can be prevented from being directly exposed to the external environment, thereby preventing its properties from deteriorating.

The skin layer may be applied with the resin of the first layer 11. In this case, the mechanical and optical properties and processability of the package film can be further improved.

The thickness of the skin layer may be applied at a thickness ratio of 5 to 30 based on the thickness 100 of the laminate 10. Specifically, the thickness of the skin layer may be applied at a thickness ratio of 10 to 25, or 15 to 20, based on the thickness 100 of the laminate 10.

If the skin layer is applied to both the top and bottom of the laminate 10, the thickness of the skin layer described above refers to the thickness of one skin layer.

Package Film

The package film 100 may have an oxygen permeability of 10 cc/($m^2$-day-atm) or less, measured at a temperature of 23.0°C±0.5°C.

Specifically, the oxygen permeability of the package film 100 may be 7.5 cc/($m^2$-day-atm) or less, 5.5 cc/($m^2$-day-atm) or less, 4 cc/($m^2$-day-atm) or less, 3 cc/($m^2$-day-atm) or less, 2 cc/($m^2$-day-atm) or less, 1 cc/($m^2$-day-atm) or less, or 0.1 cc/($m^2$-day-atm) or less. Alternatively, it may be 0.05 cc/($m^2$-day-atm) or less. The oxygen permeability of the package film 100 may be greater than or equal to 0.0001 cc/($m^2$-day-atm). If the above range is satisfied, the package film 100 can effectively block oxygen from entering from the outside. The above oxygen permeability is based on a measurement at 23°C (±0.5°C).

The moisture permeability of the package film 100 may be 50 g/($m^2$-day) or less.

The package film 100 may have a moisture permeability of 50 g/($m^2$-day) or less, 45 g/($m^2$-day) or less, 40 g/($m^2$-day) or less, 36 g/($m^2$-day) or less, 25 g/($m^2$-day) or less, 24 g/($m^2$-day) or less, or 23 g/($m^2$-day) or less. The moisture permeability of the package film 100 may be greater than or equal to 0.0001 g/($m^2$-day), or greater than or equal to 0.001 g/($m^2$-day). In such a case, the package film 100 can effectively block moisture from entering from the outside.

The above moisture permeability values were measured at a temperature and relative humidity of 37.8°C±0.5°C and 100 RH% in accordance with ASTM F1249-20 using a PERMATRAN-W700 tester from MOCON, USA at any thickness selected from 0.3 mm to 0.15 mm, but are not limited to this method of determining moisture permeability.

The overall thickness of the package film 100 may be from 10 μm to 1,000 μm. Specifically, the total thickness of the package film 100 may be from 20 μm to 500 μm, from 30 μm to 250 μm, from 40 μm to 200 μm, or from 60 μm to 100 μm. The package film 100 may omit an adhesive layer between the first layer 11 and the second layer 12, so that the overall thickness can be easily adjusted.

The package film 100 may have a maximum thickness deviation ($MTD_{50}$) represented by Equation 1 below of 10 μm or less. Specifically, the package film 100 may have a maximum thickness deviation (MTD50) represented by Equation 1 below of 10 μm or less, 8.5 μm or less, 5 μm or less, 3 μm or less, 2.7 μm or less, 2.5 μm or less, or 2.0 μm or less. If the above range is satisfied, the package film 100 may be easy to maintain flatness, which may improve processability.

$$[\text{Equation 1}]$$

$$MTD_{50} = THK_{max} - THK_{min}$$

In Equation 1 above, $THK_{max}$ is the maximum thickness of a specimen of the package film 100 having a width of at least 50 cm when the thickness is measured at 2 cm intervals, and $THK_{min}$ is the minimum thickness of a specimen of the package film 100 having a width of at least 50 cm when the thickness is measured at 2 cm intervals.

The package film 100 may have a maximum thickness deviation (MTD200) represented by Equation 2 below of 10 μm or less. Specifically, the package film may have a maximum thickness deviation ($MTD_{200}$) represented by Equation 2 below of 10 μm or less, 8.5 μm or less, 5 μm or less, 3 μm or less, 2.7 μm or less, 2.5 μm or less, or 2.0 μm or less. If the above range is satisfied, the package film 100 may be easy to maintain flatness, which may improve processability.

$$[\text{Equation 2}]$$

$$MTD_{200} = THK_{max} - THK_{min}$$

In Equation 2 above, $THK_{max}$ is the maximum thickness of a package film specimen with a width of at least 200 cm, measured at 2 cm intervals, and $THK_{min}$ is the minimum thickness of a package film specimen with a width of 200 cm, measured at 2 cm intervals.

The package film 100 may have a light transmittance for the visible light region of wavelengths 380 nm to 780 nm of at least 80%. Specifically, the light transmittance to the visible light region of wavelengths 380 nm to 780 nm may be greater than or equal to 85%, greater than or equal to 90%, or greater than or equal to 95%. The package film 100 may have a light transmittance for the visible light region of wavelengths 380 nm to 780 nm of less than 100%. If the above range is satisfied, the package film 100 has excellent light transmittance and can be applied to the display device described hereinafter to realize excellent optical properties.

The package film 100 may have a haze of 30% or less. For example, the package film 100 may have a haze of 15% or less, 10% or less, 9% or less, or 5% or less. The package film 100 may have a haze of 0.001% or more. When the above ranges are met, the film is transparent and can be used in applications requiring transparency and can be more favorable for the generation of printed layers when applied.

Method of Manufacturing the Package Film

A method of manufacturing the package film 100, according to another embodiment, comprises operations of preparing a composition; obtaining an unstretched sheet; and obtaining a multilayer film.

The operation of preparing the composition comprises preparing the first layer composition and the second layer composition.

The first layer composition comprises a polyester resin comprising a diol residue and a dicarboxylic acid residue.

The second layer composition comprises a vinyl alcohol-based copolymer resin.

Specific descriptions of the first layer composition and the second layer composition are redundant with the descriptions given above, and therefore are omitted in detail.

The first layer composition and the second layer composition may each be prepared in chip form. Preparing the respective compositions in chip form may facilitate storage and ease of application in the melt operation.

The preparing operation may further comprise drying the first layer composition and the second layer composition in the form of chips. The second layer composition may be applied to the dried chips.

The drying may be performed at 40°C to 100°C and may be performed at 50°C to 80°C. The drying may be carried out for 2 hours to 24 hours and may be carried out for 6 hours to 18 hours.

Exemplarily, hot air drying may be applied. The moisture content in the dried chips may be 300 ppm or less, or 200 ppm or less. The moisture content may be greater than or equal to 30 ppm. When the moisture-dried chips are applied in this manner, the generation of bubbles caused by moisture can be substantially suppressed, and the appearance of the manufactured product can be improved. It can also provide smooth processability.

The operation of obtaining an unstretched sheet is to melt extrude the first layer composition and the second layer composition, respectively, to obtain an unstretched sheet comprising a laminate alternately laminated with a first layer 11 comprising the first layer composition and a second layer 12 comprising the second layer composition.

The melt extrusion temperature of the first layer composition may be greater than or equal to 220°C. For example, the melt extrusion temperature of the first layer composition may be greater than or equal to 230°C, or greater than or equal to 240°C.

The melt extrusion temperature of the second layer composition may be 180°C or higher. For example, the melt extrusion temperature of the second layer composition may be 190°C or higher, or 200°C or higher.

The melt extrusion temperature of the first layer composition and the melt extrusion temperature of the second layer composition may be the same or different. For example, the difference between the melt extrusion temperature of the first layer composition and the melt extrusion temperature of the second layer composition may be 20°C or less, or 15°C or less. The difference may be 0°C or more.

The difference between the melt temperatures of the first layer composition and the second layer composition can be made for the purpose of controlling the melt viscosity. For example, when the extruder is configured in the order of a melting conduit (a conduit through which the molten resin moves) - a stacking means (e.g., a multilayer block) - a die, the temperature of the melting conduit of the first layer composition and the second layer composition may be different. When the melt extrusion process is performed in the manner described above, it may be easier to control the thickness of each layer in the film.

The laminate may have at least three alternating layers of first and second layers. For example, the laminate may have between 3 and 255 alternating layers of first and second layers.

The alternating lamination means may be any lamination means applied in film fabrication, for example, feed-blocks, or multi-manifolds, etc.

The operation of obtaining the unstretched sheet may comprise casting the laminate, such as by pressing the laminate against a cooling roll.

The operation of obtaining a package film is to obtain a multilayer film by stretching the laminated sheet and heat-fixing.

The extension may be biaxial extension or successive biaxial extension. Specifically, the extension may be a 2 to 4 times in the machine direction (MD) from 40°C to 130°C and a 3 to 6 times in the transverse direction (TD) from 50°C to 150°C.

The heat-fixing operation may be carried out at a temperature from 50°C to 300°C, 100°C to 200°C, 125°C to 175°C, or 140°C to 160°C.

Through the above stretching and the above heat-fixing, the package film can improve mechanical strength while having a small thickness and can also improve dimensional stability.

The specific description of the package film and the laminate is redundant with that given above, so we will not describe it in detail.

The thickness ratio, number of layers, etc. are the same as described above, and the thickness of each layer can be controlled in consideration of the stretching process described above.

In this way, multilayer films with excellent quality can be produced in a relatively simple and efficient way. The resulting films are useful as package films.

Package Material

In another embodiment, the package material comprises a package film as described above. The specific description of the package film is redundant with that given above, and therefore detailed description is omitted.

The package material may be, for example, a disposable package material, a food package material, or the like, and the package film may be applied as it is, or may further comprise an aluminum foil, a color layer, a printing layer, or the like.

The package material can effectively prevent the package from being exposed to external oxygen due to the low oxygen permeability of the package film, which can help prevent the contents from deteriorating.

The following will be described in more detail with specific embodiments. The following embodiments are provided by way of example only to illustrate the embodiments and are not intended to limit the scope of the embodiments.

[Example 1]

<Preparation of the first layer composition>

The first layer composition was prepared by mixing the diol component and the dicarboxylic acid component in an autoclave equipped with a stirrer and a distillation column.

Specifically, in the first layer composition, the diol component was 80 mol% ethylene glycol (EG), 15 mol% neopentyl glycol (NPG), and 5 mol% diethylene glycol (DEG), and the dicarboxylic acid component was 100 mol% dimethyl terephthalate (DMT).

The first layer composition was subjected to transesterification in the presence of a transesterification catalyst. Specifically, the catalyst for the transesterification was manganese acetate at a concentration of 0.07 parts by weight based on the weight of dicarboxylic acid. The transesterification reaction mixture was then heated to 220°C while removing the by-product methanol.

When the transesterification reaction was terminated, 0.07 parts by weight of silica having an average particle diameter of 0.28 μm per 100 parts by weight of dicarboxylic acid and 0.4 parts by weight of trimethylphosphate as stabilizers per 100 parts by weight of dicarboxylic acid were added to the first layer composition.

After 5 minutes, 0.035 parts by weight of antimony trioxide and 0.005 parts by weight of tetrabutylenetitanate per 100 parts by weight of dicarboxylic acid were added to the first layer composition as a polymerization catalyst and stirred for 10 minutes.

The first layer composition was then transferred to a second reactor equipped with a vacuum apparatus, heated to 285°C while gradually decompressing, and polymerized for about 210 min to obtain the first layer composition.

<Second layer composition 1 >

As a second layer composition 1, a butenediol vinyl alcohol copolymer (BVOH) produced by the copolymerization of butenediol with vinyl acetate followed by hydrolysis of the vinyl acetate can be applied.

Alternatively, the butenediol vinyl alcohol copolymer (BVOH) may be a BVOH sold by Mitsubishi Chemical as NICHIGO GPOLYMER™. Specifically, BVE8049P of NICHIGO GPOLYMER™ was applied.

<Second layer composition 2>

As the second layer composition 2, a copolymer of ethylene and vinyl alcohol, Soarnol (Grade: A4412B, ethylene content 44 mol%) from Mitsubishi Chemical Corporation was applied.

<Manufacturing of Multilayer Barrier Film>

The first layer composition was first dried at 100°C for at least 4 hours in a desiccant dryer and then secondly dried at 160°C for at least 6 hours to remove moisture. The second layer composition 1 was applied as it is in its dried packaging.

Using two extruders and a preset three-layer stackable feed-block, the first layer composition was melt extruded using an extruder set to a temperature of 240°C and the second layer composition 1 was melt extruded using an extruder set to a temperature of 200°C. The discharge amount ratio (volume ratio) of the first layer composition and the second layer composition 1 was 90:10.

Within a three-layer feed-block, the first layer composition was branched into two skin layers, the second layer composition 1 was branched into an intermediate layer, and then laminated. The laminates were then passed through a 400 mm die and pressed against a cooling roll cooled to 20°C to obtain a total of three layers of unstretched sheets.

The above three-layer unstretched sheet was stretched 3.0 times in the machine direction at 85°C and 4.0 times in the transverse direction at 110°C, and then fixed at 150°C with a relaxation rate of 1% to prepare a 20 μm thick biaxially stretched three layer film (Example 1).

**[Examples 2 through 4]**

Example 2 is prepared as in Example 1, but with a thickness of 45 μm after stretching and heat-fixing.

Example 3 is prepared as in Example 1, but with a thickness of 60 μm after stretching and heat-fixing.

Example 4 is prepared as in Example 1, but with a discharge volume ratio (volume ratio) of 95:5 between the first layer composition and the second layer composition.

**[Examples 5 through 8]**

Example 5 was prepared as in Example 1, but using in a multilayer feed-block, the first layer composition was alternately laminated in 36 layers and the second layer composition was alternately laminated in 36 layers, and the first layer 11 and the second layer 12 were each laminated in 73 layers, and the outermost angular layers of the upper and lower surfaces were each provided with a skin layer, and the skin layer was applied with the first layer composition to have the same composition as the first layer 11.

Example 6 was prepared as in Example 5, but the discharge amount ratio (volume ratio) of the first layer composition and the second layer composition was 70:30.

Example 7 was prepared as in Example 1, but using in a multilayer feed-block, the first layer composition was alternately laminated in 72 layers and the second layer composition was alternately laminated in 72 layers, and the first layer 11 and the second layer 12 were each laminated in 145 layers, and the outermost angular layers of the top and bottom surfaces were each provided with a skin layer, and the skin layer was applied with the first layer composition to have the same composition as the first layer 11.

Example 8 was prepared as in Example 7, but with a discharge amount ratio (volume ratio) of 70:30 between the first layer composition and the second layer composition.

**[Examples 9 and 10]**

Example 9 was prepared as in Example 2, except that the second layer composition was an ethylene vinyl alcohol copolymer (EVOH) rather than a butenediol vinyl alcohol copolymer (BVOH).

Example 10 was prepared as in Example 9, but using a multilayer feed-block, the first layer composition was alternately laminated in 36 layers and the second layer composition was alternately laminated in 36 layers, and the first layer 11 and the second layer 12 were each laminated in 73 layers, and the outermost angular layers of the top and bottom surfaces were each provided with a skin layer, and the skin layer was applied with the first layer composition to have the same composition as the first layer 11.

**[Comparative Example 1]**

Comparative Example 1 utilized the first layer composition described in Example 1. The first layer composition was first dried at 100°C for at least 4 hours in a desiccant dryer and then second dried at 160°C for at least 6 hours to remove moisture. The first layer composition was melt extruded with an extruder set to a temperature of 240°C. The first layer composition was then passed through a 400 mm die and pressed against a cooling roll cooled to 20°C to obtain a single layer unstretched sheet. The obtained monolayer unstretched sheet was stretched 3.0 times in the machine direction at 85°C and 4.0 times in the transverse direction at 100°C, and then heat-fixed at 150°C with a relaxation rate of 1% to prepare a 45 μm thick biaxially stretched monolayer film (Comparative Example 1).

**[Evaluation Example 1: Evaluation of Oxygen Permeability]**

The oxygen permeability of the multilayer barrier film prepared above was measured according to ASTM D3985-17 using OX-TRAN 702 of MOCON, USA, with a test area of 50 cm$^2$ under the conditions of 1 atm, temperature 23.0°C±0.5°C, and 0% relative humidity. [Unit: cc/(m$^2$-day)]

**[Evaluation Example 2: Evaluation of Moisture Permeability]**

Moisture permeability, according to ASTM F1249-20, was measured using a PERMATRAN-W700 tester from MOCON, USA, at a temperature and relative humidity of 37.8°C±0.5°C and 100 RH%. [Unit: g/(m$^2$-day)]

**[Evaluation Example 3: Evaluation of Film Uniformity]**

Measure the difference (MTD$_{200}$) between the maximum thickness (THK$_{max}$) and the minimum thickness (THK$_{min}$) of the multilayer barrier film prepared above by measuring the thickness of a 200 cm wide film at 2 cm intervals. If the difference between the maximum thickness and minimum thickness is less than 3 $\mu$m, it is considered good.

**[Evaluation Example 4: Other]**

The haze of the film was measured according to ISO 14782 using the NDH-8000N haze meter from Nippon denshoku, Japan.
The light transmittance of the films was measured using a spectrophotometer, Ultrascan PRO (Hunter Labs, USA).
The results of each measurement are summarized in Table 1 and Table 2 below.

[Table 1]

| Example # | | Example 1 | Example 2 | Example 3 | Example 4 | Example 5 | Example 6 |
|---|---|---|---|---|---|---|---|
| Thickness of Film ($\mu$m) | | 20 | 45 | 60 | 20 | 20 | 20 |
| Number of Skin Layers | | 2 | 2 | 2 | 2 | 2 | 2 |
| Number of Layers of First/Second Layer Set | | - | - | - | - | 36 | 36 |
| Total Number of layers | | 3 | 3 | 3 | 3 | 73 | 73 |
| Composition | First Layer Composition | 90 | 90 | 90 | 95 | 90 | 70 |
| | Second Layer Composition 1 (BVOH) | 10 | 10 | 10 | 5 | 10 | 30 |
| | Second Layer Composition 2 (EVOH) | - | - | - | - | - | - |
| Properties of Film | Oxygen Permeability (cc/(m$^2$·atm·da y)) | <0.01 | <0.01 | <0.01 | <0.01 | <0.01 | <0.01 |
| | Moisture Permeability (g/(m$^2$·day)) | 40 | 24 | 23 | 42 | 38 | 43 |
| | MTD$_{200}$ ($\mu$m) | 2.6 | 2.4 | 1.9 | 2.7 | 2.5 | 3 |
| | Haze (%) | 6.5 | 10 | 25 | 5.4 | 4.7 | 5 |
| | Light Transmittance (%) | 90.76 | 90.23 | 90.02 | 90.83 | 90.88 | 90.86 |
| | Interfacial Peeling | good | good | good | good | good | good |

[Table 2]

| Example # | Example 7 | Example 8 | Example 9 | Example 10 | Comparati ve Example 1 |
|---|---|---|---|---|---|
| Thickness of Film ($\mu$m) | 20 | 20 | 45 | 20 | 45 |
| Number of Skin Layers | 2 | 2 | 2 | 2 | - |
| Number of Layers of First/Second Layer Set | 72 | 72 | - | 36 | - |
| Total Number of layers | 145 | 145 | 3 | 73 | 1 |

(continued)

| Example # | | Example 7 | Example 8 | Example 9 | Example 10 | Comparati ve Example 1 |
|---|---|---|---|---|---|---|
| Composition | First Layer Composi- tion | 90 | 70 | 90 | 90 | 100 |
| | Second Layer Composition 1 (BVOH) | 10 | 30 | - | - | - |
| | Second Layer Composition 2 (EVOH) | - | - | 10 | 10 | - |
| Properties of Film | Oxygen Permeability ($cc/(m^2 \cdot atm \cdot day)$) | <0.01 | <0.01 | 6.1 | 4.3 | 72.4 |
| | Moisture Permeability ($g/(m^2 \cdot day)$) | 39 | 45 | 26 | 22 | 24 |
| | $MTD_{200}$ ($\mu m$) | 2.7 | 2.9 | 11.1 | 8.4 | 1.9 |
| | Haze (%) | 4.1 | 4.5 | 4.8 | 3.2 | 3.93 |
| | Light Transmittance (%) | 90.95 | 90.9 | 90.89 | 91.2 | 91 |
| | Interfacial Peeling | good | good | need to sup- plemen t | need to sup- plemen t | - |

Comparative Example 1 is a film using only the first layer 11 alone. The film according to Comparative Example 1 has a high oxygen permeability, confirming that it cannot perform the role of blocking oxygen as a barrier film.

The films prepared by Examples 1 to 8 have a fairly low oxygen permeability of 0.01 $cc/(m^2$-atm-day) or less and a low moisture permeability of 50 $g/(m^2$-day) or less. In addition, the films prepared by Examples 1 to 8 of the present disclosure have good interfacial peel properties as evaluated by an evaluator.

In Examples 9 and 10, the oxygen permeability is relatively high compared to Examples 1 to 8, but it is sufficient to be applied as a package film for food products and the like, and the moisture permeability is relatively low, indicating excellent properties. In addition, the optical properties are relatively excellent and are thought to be suitable for printing and the like.

Regarding the interfacial peeling property, considering that the samples of Examples 9 and 10 were obtained by coextrusion without applying a separate adhesive layer, it was evaluated that reinforcement such as forming an adhesive layer at the interface is necessary.

Embodiments may provide a package film or the like having excellent oxygen barrier permeability characteristics, etc.

Embodiments can also provide package films and package materials having excellent properties such as low oxygen permeability, low moisture permeability, and optical properties, and improved printability.

Although preferable embodiments of the present disclosure have been described above in detail, the scope of the present disclosure is not limited thereto, and various modifications and improvements made by those skilled in the art using the basic concepts of the present disclosure as defined in the following claims also belong to the scope of the present disclosure.

**Claims**

1.   A package film comprising:

a laminate comprising a first layer, and a second layer disposed on the first layer,
wherein the first layer comprises a polyester resin comprising a diol residue and a dicarboxylic acid residue,
wherein the second layer comprises a vinyl alcohol-based copolymer resin, and
wherein the package film has an oxygen permeability of 10 $cc/(m^2 \cdot day \cdot atm)$ or less at 23°C.

2.   The package film of claim 1 or claim 2,
further having a moisture permeability of 50 $g/(m^2 \cdot day)$ or less.

3. The package film of claim 1 or claim 2,
   wherein the vinyl alcohol-based copolymer resin is a butenediol vinyl alcohol copolymer resin or an ethylene vinyl alcohol copolymer resin.

4. The package film of any one from claim 1 to claim 3,
   wherein the vinyl alcohol-based copolymer resin has a pyrolysis temperature of 210°C to 230°C.

5. The package film of any one from claim 1 to claim 4,
   wherein the first layer is located in at least one of the two outermost layers of the laminate.

6. The package film of any one from claim 1 to claim 5,
   wherein the laminate has a light transmittance of 80% or more in the visible light of wavelengths 380 nm to 780 nm.

7. The package film of any one from claim 1 to claim 6,
   wherein the laminate has a haze of 30% or less.

8. The package film of any one from claim 1 to claim 7,
   wherein the laminate comprises 3 to 225 alternating layers of the first layer and the second layer.

9. The package film of any one from claim 1 to claim 8,

   wherein the package film has a maximum thickness deviation ($MTD_{200}$) of 10 $\mu$m or less, as represented by Equation 2 below;

   [Equation 2]

   $$MTD_{200} = THK_{max} - THK_{min},$$

   wherein $THK_{max}$ is a maximum thickness of a package film specimen with a width of at least 200 cm, measured at 2 cm intervals, and $THK_{min}$ is a minimum thickness of a package film specimen with a width of 200 cm, measured at 2 cm intervals.

10. A packaging material for packaging a food product,
    the packaging material comprising the package film of claim 1.

**FIG. 1**

100

12

10

11

**FIG. 2**

100

11

10

12

11

FIG. 3

100

10

Europäisches Patentamt
European Patent Office
Office européen des brevets

# EUROPEAN SEARCH REPORT

**Application Number**

EP 24 20 5206

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/080498 A1 (SK MICROWORKS CO LTD [KR]) 11 May 2023 (2023-05-11) * claims 1-15; examples 1-6; tables 1,2 * ----- | 1-10 | INV. B32B27/08 B32B27/30 B32B27/36 |
| X | KR 2023 0063811 A (SK MICROWORKS CO LTD [KR]) 9 May 2023 (2023-05-09) * paragraph [0088]; claims 1-10; examples 1-4 * ----- | 1-10 | |

**TECHNICAL FIELDS SEARCHED (IPC)**

B32B

The present search report has been drawn up for all claims

| Place of search | Date of completion of the search | Examiner |
|---|---|---|
| The Hague | 29 January 2025 | Chatron-Michaud, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.** EP 24 20 5206

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2025

| Patent document cited in search report | Publication date | Patent family member(s) | | Publication date |
|---|---|---|---|---|
| WO 2023080498 A1 | 11-05-2023 | EP | 4427938 A1 | 11-09-2024 |
| | | US | 2024408857 A1 | 12-12-2024 |
| | | WO | 2023080498 A1 | 11-05-2023 |
| KR 20230063811 A | 09-05-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230134401

- KR 100516550